# EUROPEAN PATENT APPLICATION

(11) **EP 4 700 268 A1**
(43) Date of publication of application: **25.02.2026**
(21) Application number: 24723191.3
(22) Date of filing: 02.04.2024
(51) Int. Cl.: F16L 55/40, G01M 3/24

(54) **DEVICE FOR DETECTING BLOCKAGES IN WATER PIPES, AND METHOD FOR DETECTING BLOCKAGES USING SUCH A DEVICE**

(30) Priority: 03.04.2023 ES 202330276
(71) Applicant: Aganova S.L., 29590 Málaga (ES)
(72) Inventor: RAMÍREZ GARCÍA, Agustín, 29590 MÁLAGA (ES)
(74) Representative: Herrero & Asociados, S.L.
(86) International application number: PCT/ES2024/070203
(87) International publication number: WO 2024/209124

(57) **Abstract**

It allows to detect blockages in a more precise, global and less intrusive way than current systems, providing a structurally simpler, and consequently more economical and reliable device, the detector device comprising an external casing (1), made of plastic material suitable for contact with drinking water, and inside which are housed at least one motherboard (2), at least one speaker (3), and at least one high-capacity battery (4); wherein the casing (1) has perpendicularly cut-off upper and lower ends; wherein flat sheets (5) of reduced thickness are arranged at said cut-off upper and lower ends. Secondly, a procedure is described for the detection of blockages by means of such a device. The procedure comprises a series of consecutive stages, prior to which a theoretical study of the section of pipe to be inspected is carried out.

## Description

### OBJECT OF THE INVENTION

The present invention falls within the technical field of pipe network inspection devices. More specifically, the invention refers to a device for detecting blockages in water pipes, as well as to the associated detection method, by means of which it is possible to determine whether a given section of pipe is navigable, i.e. whether this section is suitable for the use of other "in-line" devices that can provide additional information on the state of the pipes.

### BACKGROUND OF THE INVENTION

Nowadays, one of the most common problems encountered by companies managing water transport pipe networks is having blockages inside their pipes.

A blockage in a water pipe can have different origins. Mainly, it is usually due to the erosion of the pipe itself due to the proximity of the end of the pipe's useful life, but it can also be due to the introduction of unknown elements into the pipe due to maintenance failures or unintentionally partially closed valves.

As a result of a blockage inside a water pipe, a number of problems can occur, including the following:
- Partial or total loss of flow. The latter could lead to pipe bursting.
- Increased pressure inside the pipeline. A prolonged increase in pressure could accelerate the deterioration of the pipe and/or cause it to burst.
- Loss of water quality, as blockages often lead to high concentrations of bacteria, increased turbidity, change in odour and colour of the water, etc.
- Inability to use in-line systems to analyse the internal condition of pipes, as they are trapped.

It is therefore crucial for water pipe managers to detect where blockages exist in their pipes, so that they can take appropriate measures to remove them as soon as possible.

Currently, there are known systems that detect blockages in pipes, which can be divided into four groups:
- Complex, large-scale, pig-type systems that need to be in direct contact with the pipe wall, and therefore vary according to the pipe diameter. This type of system is described for example in Japanese patent applications JP202107070976A and JP2001523556A.
- Camera systems, which can only travel short distances because they transmit information via a cable. Patent applications EP0450814A1 and WO2010100480A2 relate to this type of system.
- Systems that analyse changes in pressure and flow measurements, which give an estimated rather than a precise result of where a blockage might exist. These systems are those used in patent applications CN104110890A and JP2013024575A.
- Systems based on non-destructive techniques, such as radiological techniques, acoustic techniques, fibre optics, etc., which often require the pipe to be uncovered in order to gain access to its outer wall. US patents US11150154B2 and US9228889B2 refer to this type of system.

These known systems, although they are able to detect the existence of blockages, with greater or lesser efficiency, in general, have a greater structural complexity than the device that is the subject of the present invention, and are therefore more likely to suffer more problems, as they require multiple parts and components susceptible to failures and breakdowns. In addition, it should be added that in the case of "pig" type systems and systems with a camera and cable, they can become trapped in the obstruction and worsen the problem in addition to the obstruction itself.

### DESCRIPTION OF THE INVENTION

The present invention solves the aforementioned problems and drawbacks by providing a device for detecting blockages inside water pipes in a more accurate, global and less intrusive way than current systems, providing a structurally simpler, and consequently more economical and reliable device.

The device for detecting blockages comprises first of all an external housing made of plastic, which is suitable for contact with drinking water, i.e. without affecting the properties of water for human consumption. Preferably the housing material is of Derlin type or similar (polyoxymethylene). According to a preferred embodiment, the housing has an essentially spherical or ovoid geometry, although it is envisaged that it may have other geometries.

Inside the housing are at least one motherboard, at least one high-power speaker and at least one high-capacity battery with a battery life of several days, typically 4 or more days.

In addition, the housing has perpendicularly cut off upper and lower ends; such that flat sheets of reduced thickness are arranged on the cut off upper and lower ends of the housing. These sheets are preferably made of material of high mechanical resistance, low density and with the smallest possible thickness to ensure the integrity and tightness of the sphere, since the smaller the thickness and density of the material, the more favourable the transmission of sound through it. Materials such as aluminium, titanium, stainless steel or carbon fibre are considered. By having flat sheets at the ends of the housing, the volume of empty air between the inner speaker and the housing wall is also reduced, thus reducing sound energy losses, and enhancing sound transmission.

It is envisaged that such flat sheets may be fixed to the housing by means of screws or other means to ensure watertightness, such as a retaining ring.

Flat sheets also produce a lower reflection of sound compared to the spherical or domed surface. The lower the reflection, the more energy is transmitted to the material (flat sheet) and therefore the more sound is transmitted to the outside of the sphere. Flat sheets mean a smaller total enclosure area facing the loudspeaker compared to the spherical or dome surface, so the absorption will be lower and the transmission to the outside will be higher.

Firstly, the section of pipe in which the existence of blockages is to be detected is defined. For this purpose, an initial point is defined, where the device will be inserted without interrupting the supply, by means of an insertion system, such as a pusher; and an end point, where the device would be extracted, by means of a net type extraction system or similar, in the event of not being blocked by any existing obstruction.

Once the device of the invention is inserted into the pipe, it navigates along the pipe, driven by the flow of water. During navigation, the device emits a sound that is easily audible by means of a sound detection device, which makes it possible to verify that the device is following the expected trajectory along the section.

If the device for detecting blockages, the subject of the invention, does not reach the extraction point, then it is confirmed that there is an obstruction in the section where the device is trapped. Thanks to the high-powered sound emission, the lost device can be located by tracing the route with a sound detection device, thus defining the point where the device is trapped and, therefore, locating the point where there is an obstruction in the pipeline.

In this case, where the device of the invention does not reach the extraction point, it can be confirmed that the analysed pipe section is not navigable for the use of other in-line devices that can provide more information on the condition of the pipes.

It is not necessary to recover the lost device, since as mentioned above, the material of the housing is suitable for contact with drinking water, so it can remain inside the pipe for an unlimited time without affecting the quality of the water. Moreover, as it is a small device, it does not affect the functioning of the pipe.

If the device reaches the extraction point, then it is confirmed that there is no significant obstruction in the section and the device is retrieved by the extraction system. In this case, it can be confirmed that the analysed pipe section is navigable for the use of other in-line devices to provide further information on the condition of the pipes. This ensures the successful use of this other type of device.

The second object of the invention relates to a method for detecting blockages using the device described above. This method comprises the following steps:
- theoretical study of the pipe section to be inspected;
- installation of control points to validate the passage of the device by detecting the sound emitted by the device;
- installation of a device extraction system at an extraction point determined in the study;
- insertion of the device at a pipe insertion point determined in the study, by means of an insertion system, without interruption of service;
- tracking the path of the device along the length of the pipeline by detecting the signals emitted by the loudspeakers through an acoustic signal detection device; and
- removal of the device at the point of removal of the pipe to be inspected, or
- location of the missing device in the pipe section.

Preferably, the first stage of theoretical study of the pipe section to be inspected comprises in turn:
- Study of the plans;
- Determination of the insertion and removal points of the device;
- Determination of the control points, which validate the passage of the device by detecting the sound emitted by the device;
- Flow measurement and balancing;
- Calculation of estimated time of passage through checkpoints; and
- Calculation of the estimated time of arrival at the extraction point.

As for the second stage of installation of the control points, this is preferably carried out using the existing elements in the pipe itself, such as manholes or similar. These control points confirm the correct navigation of the device to each specific point. At the control points, the passage of the device is detected by an external or internal sound detection device.

Then, in the third stage, the extraction system is placed on a valve in the pipeline, so that the device can be picked up if it actually reaches the extraction point and is not lost, indicating that the section is navigable.

Subsequently, the device is inserted into the pipeline by means of the insertion system, without interruption of the service. After the insertion of the device, it starts to navigate freely inside the pipeline, whose route is controlled and monitored by means of an acoustic signal detector device.

In case the device reaches the extraction point after having travelled the expected distance, the device is picked up by the extraction system, confirming the navigability of this distance.

If the device is not detected at any or all of the checkpoints at the time calculated as the estimated time of passage, or if it is detected at all checkpoints but does not arrive at the extraction point at the time calculated as the estimated time of arrival at the extraction point, the device is considered lost and the localisation procedure using the sound detection device begins.

Preferably, the stage of locating the missing device in the pipe section comprises in turn the following sequence of stages:
- location of the last point of the section where the acoustic signals emitted by the loudspeakers have been detected;
- scanning of the vicinity of that point, using the previous study; and
- location of the device.

Indeed, in case the device is lost, the technician shall start searching for it with the help of the sound detection device downstream from the last control point where the passage was detected. If the passage was not detected at any control point, the procedure shall be started downstream from the insertion point. The technician uses the previous theoretical study to delimit the area through which the pipe is most likely to pass. He shall place the sound detection device in the areas with the highest sound transmission, i.e. elements that are completely or partially connected to the pipe, such as: valves, manholes, pipe branches, etc.

Finally, once the device has been located, the point where the obstruction in the pipeline is found is located, and it is confirmed that this section of the pipeline is not navigable.

### DESCRIPTION OF THE DRAWINGS

In order to complement the description being made and in order to assist in a better understanding of the features of the invention, in accordance with a preferred example of a practical embodiment thereof, a set of drawings is attached hereto as an integral part of the said description, in which the following is illustratively and non-limitingly depicted:
Figure 1.- Shows a perspective view of the device for detecting blockages, object of the invention.
Figure 2.- Shows an exploded perspective view of the device of the invention, showing its main constituent elements.

### PREFERRED EMBODIMENT OF THE INVENTION

A detailed explanation of an example of a preferred embodiment of the device which is the subject of the present invention is given below with the aid of the figures referred to above.

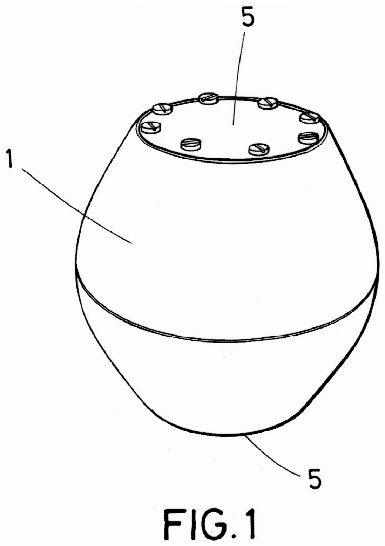

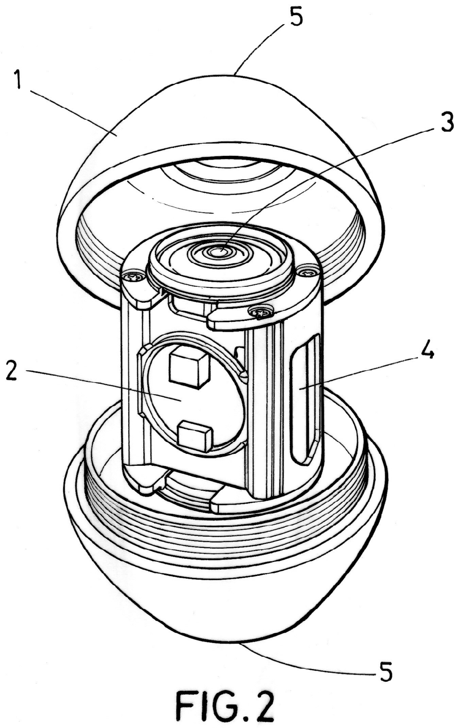

Figure 1 shows the device for detecting blockages of the invention, which consists of an external casing (1) inside which are housed, mounted on a support chassis, as shown in figure 2, at least one motherboard (2), at least one high-power loudspeaker (3) and at least one high-capacity battery (4), preferably lithium and rechargeable.

According to the present example of preferred embodiment, the casing (1) has an essentially spherical or ovoid geometry, as shown in figure 1, with its two upper and lower ends cut perpendicularly, into which are inserted the respective flat sheets (5), as covers. As can be seen in figure 1, these flat sheets (5) are arranged in parallel horizontal planes at each of the upper and lower ends of the casing (1), which have been cut off. This particularity of cutting off the ends of the casing (1) and placing flat sheets (5) in their place also makes it possible to minimise the number of possible contacts and impacts inside the pipe, thereby increasing the safety and integrity of the internal components of the device of the invention.

This casing (1) consists of two half-shells which can be coupled together in a watertight manner, and is made of plastic material, preferably polyoxymethylene.

The flat sheets (5) of the casing (1) have a reduced thickness to facilitate the transmission of sound from the loudspeakers (3) inside. These flat sheets (5) are made of a material of high mechanical strength and low density, such as a material selected from the group comprising aluminium, titanium, stainless steel and carbon fibre. These flat sheets (5) can be attached to the housing by means of screws or a retaining ring.

The device for detecting blockages described here is configured to be inserted at one point of the pipe to be inspected, without interruption of the supply, by means of a pusher type insertion system, and to be extracted at another point with a net-type extraction system or similar, after travelling along a section of the pipe to be analysed. The device moves through the pipe, driven by the flow of water.

During navigation, the device emits a sound, amplified by the loudspeakers (3) and whose transmission is aided by the flat sheets (5), which is audible by a sound-detecting device.

## Claims

1. A device for detecting blockages in water pipes, **characterised in that** the device comprises an external casing (1) made of plastic material suitable for contact with drinking water, inside which at least one motherboard (2), at least one high-power speaker (3) and at least one high-capacity battery (4) are housed;
wherein the casing (1) has perpendicularly cut-off upper and lower ends; wherein flat sheets (5) of reduced thickness are arranged on the cut-off upper and lower ends of the casing (1).

2. Device according to claim 1, wherein the casing (1) consists of two half-shells which can be coupled together in a watertight manner.

3. Device according to any one of the preceding claims wherein the casing (1) has an essentially spherical or ovoid geometry.

4. Device according to any one of the preceding claims, wherein the flat sheets (5) are made of a material selected from the group comprising aluminium, titanium, stainless steel and carbon fibre.

5. Device according to any one of the preceding claims, wherein the flat sheets (5) are fixed to the casing (1) by means of screws, retaining ring or similar means of attachment.

6. A method for detecting blockages which makes use of the device described in any one of claims 1-5, **characterised in that** it comprises the following steps:
- theoretical study of the pipe section to be inspected;
- installation of control points to validate the passage of the device by detecting the sound emitted by the device;
- installation of a device extraction system at an extraction point determined in the study;
- insertion of the device at a pipe insertion point determined in the study, by means of an insertion system, without interrupting the service;
- tracking the path of the device along the length of the pipeline by detecting the signals emitted by the loudspeakers (3) through an acoustic signal detection device; and
- removal of the device at the point of removal of the pipe to be inspected, or
- location of the missing device in the pipe section.

7. The method for detecting blockages according to claim 6 wherein the first stage of theoretical study of the pipe section to be inspected comprises in turn:
- study of the plans;
- determination of the insertion and removal points of the device;
- determination of the control points, which validate the passage of the device by detecting the sound emitted by the device;
- flow measurement and balancing;
- calculation of estimated time of passage through checkpoints; and
- calculation of the estimated time of arrival at the extraction point.

8. The method for detecting blockages according to claim 6 wherein the step of locating the missing device in the pipe section comprises the following sequence of steps:
- location of the last point of the section where the acoustic signals emitted by the speaker (3) have been detected;
- scanning of the vicinity of that point, using the previous study; and
- location of the device.
